# EUROPÄISCHE PATENTSCHRIFT

(11) **EP 0 383 278 B1**
(45) Veröffentlichungstag und Bekanntmachung des Hinweises auf die Patenterteilung: **14.12.1994**
(21) Anmeldenummer: 90102826.6
(22) Anmeldetag: 13.02.1990
(51) Int. Cl.: B62D 49/00

(54) **Schlepper mit kippbarer Kabine für den landwirtschaftlichen Einsatz**
Tractor with a tiltable cab for agricultural deployment
Tracteur avec cabine basculante, notamment à utiliser dans l'agriculture

(30) Priorität: 13.02.1989 DE 3904225
(43) Veröffentlichungstag der Anmeldung: 22.08.1990
(73) Patentinhaber: ANTON SCHLÜTER MÜNCHEN GMBH & CO., D-85354 Freising (DE)
(72) Erfinder: Leutner, Siegfried, D-8050 Freising (DE)
(74) Vertreter: Weickmann, Heinrich, Dipl.-Ing.

(56) Entgegenhaltungen:
- DE-A- 3 545 334

## Beschreibung

Die Erfindung betrifft ein Kraftfahrzeug gemäß dem Oberbegriff des Anspruchs 1.

Die US-A-4 372 411 beschreibt ein Kraftfahrzeug dieser Bauart, bei welchem Balgenelemente ausschließlich für die Federung der Kabine und separate Kraftgeräte ausschließlich zum Kippen der Kabine vorgesehen sind.

Aus der DE-A-2 005 717 ist der Gedanke bekannt, einen Arbeitszylinder für das Kippen einer Kabine auch zu deren Federung auszubilden. Ein Hinweis auf eine geeignete kinematische Anordnung eines solchen Arbeitszylinders innerhalb eines mit Kabine ausgeführten Schleppers ist dieser Druckschrift nicht entnehmbar.

Elastische Auflagerelemente zwischen der Kabine und dem Rahmen, wie sie z. B. aus der DE-A-16 30 485 bekannt sind, sind aufgrund des Gewichts einer Kabine einer hohen Belastung ausgesetzt. Auch bei aufwendiger Gestaltung der elastischen Auflagerelemente ist deren Schwindungsdämpfung nicht immer befriedigend und deren Lebensdauer beschränkt.

Der Erfindung liegt die Aufgabe zugrunde, ohne wesentlichen Aufwand die Schwingungsdämpfung der Kabine gegenüber dem Rahmen zu verbessern.

Diese Aufgabe wird erfindungsgemäß durch die Merkmale des Patentanspruchs 1 gelöst. Bei der erfindungsgemäßen Gestaltung übernimmt also das hydraulische Kraftgerät eine zusätzliche Federungs- und ggf. Dämpfungsfunktion. Der notwendige Mehraufwand ist deshalb beschränkt auf die Mittel zur Umschaltung zwischen Kippbetrieb einerseits und Federungs- bzw. Dämpfungsbetrieb andererseits. Diese Mittel erschöpfen sich in einfachen hydraulischen Schaltelementen. Andererseits kann eine hochwirksame und lang beständige Federung ggf. in Verbindung mit einer Dämpfung erzielt werden. Dabei ist es ein besonderer Vorteil, daß die Federungs- und Dämpfungscharakteristik eines hydraulischen Kraftgeräts leicht verändert und den jeweiligen Bedürfnissen angepaßt werden kann.

Im Hinblick auf die Freigabe des Zugangs zu dem Unterflurantriebsaggregat ist es vorteilhaft, wenn eine Anlenkstelle des Kraftgeräts an der Kabine in deren Fahrstellung unterhalb der Kippachse angeordnet ist.

Für die Kabine steht ein besonders großer Kippbereich zur Verfügung, wenn die Kippachse in seitlicher Ansicht des Kraftfahrzeugs oberhalb des Umrisses der rückwärtigen Räder angeordnet ist.

Das vertikale Bewegungsspiel der Kippachse kann in einfacher Weise dadurch erreicht werden, daß die Kippachse von einer Kipp-Schiebelagerung gebildet ist, welche als Bolzenlanglochlagerung ausgebildet ist.

Beim Kippen liegt dann der Bolzen an einem Ende des Langlochs an und definiert eine eindeutige Kippachse.

Die Abfederung der Kabine auf dem Rahmen wird besonders wirksam, wenn die Kabine im Bereich der Querachse gegenüber dem Rahmen schwingungsfähig gelagert ist.

Eine solche Schwingungsfähigkeit im Bereich der Querachse kann auf einfachste Weise etwa dadurch erreicht werden, dass eine Gelenkverbindung von einer durch Splint oder dergleichen gesicherten Ösenzapfenverbindung gebildet ist, wobei die Öse an der Kabine und der Zapfen an dem Rahmen angebracht ist oder umgekehrt, und wobei von den beiden Teilen Öse und Zapfen mindestens einer elastisch an seinem jeweiligen Träger gelagert ist. Für den Übergang von Arbeitsbetrieb zum Kippbetrieb braucht dann lediglich der Splint gesetzt bzw. gezogen zu werden.

Um auch bei Ausfall des Kraftgerätes als Federungselement und Schwingungsdämpfer eine gewisse Federung zwischen der Führerplatzbaugruppe und dem Rahmen aufrecht zu erhalten, wird vorgeschlagen, dass zwischen dem Rahmen und der Kabine ausserhalb der Querachse und vorzugsweise im Bereich des Angriffs des Kraftgerätes an der Kabine mindestens ein elastisches Lagerelement vorgesehen ist, welches bei Wirkungslosigkeit des Kraftgerätes zusammen mit einer Auflagerung im Bereich der Querachse die Kabine stabil und schwingungsfähig auf dem Rahmen abstützt und zwar so, dass die Kippachse wiederum eine mittlere Stellung innerhalb ihres Schiebeweges einnimmt. Dabei kann das elastische Lagerelement so bemessen und angeordnet sein, dass es im normalen Arbeitsbetrieb die Funktion eines elastischen Endanschlags für die durch das Kraftgerät gebildete Federung übernimmt.

Optimale Federungseigenschaften ergeben sich dadurch, dass die Angriffsrichtung des Kraftgerätes annähernd durch die Sitzfläche des Führersitzes verläuft.

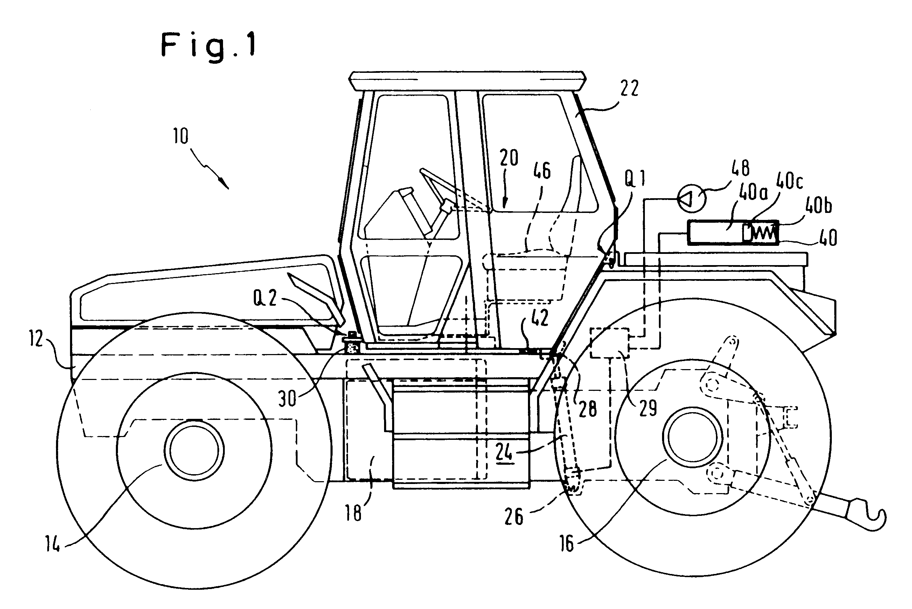

Die beiliegenden Figuren erläutern die Erfindung anhand eines Ausführungsbeispiels. Es stellen dar:
Figur 1
   eine Seitenansicht eines erfindungsgemässen Kraftfahrzeugs;
Figur 2
   eine Frontansicht des erfindungsgemässen Kraftfahrzeugs;
Figur 3
   eine Seitenansicht entsprechend Figur 1 bei hochgekippter Kabine;
Figur 4a
   die Kabinenlagerung im Arbeitsbetrieb;
Figur 4b
   die Kabinenlagerung im Arbeitsbetrieb bei unwirksamem Kraftgerät und
4c
   die Kabinenlagerung nach Beginn des Hochkippens der Kabine.

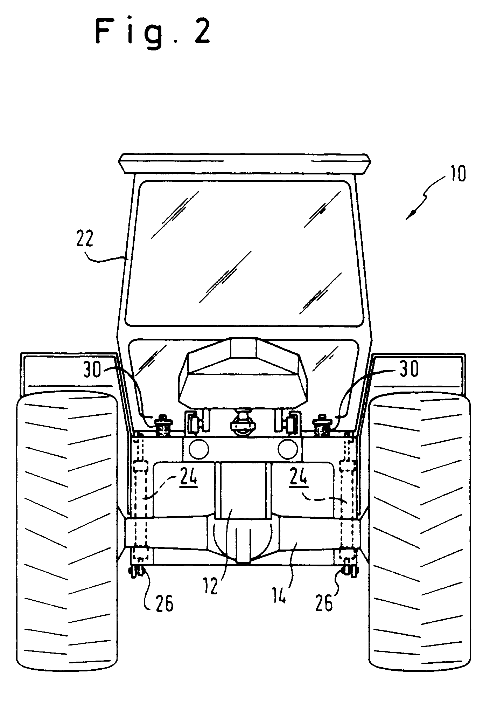

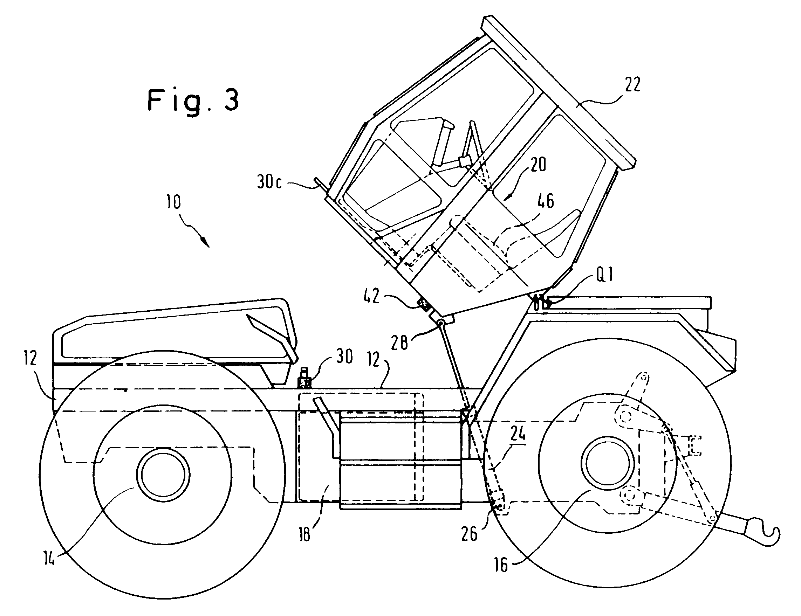

In Figur 1 ist ein als Schlepper ausgebildetes Kraftfahrzeug ganz allgemein mit 10 bezeichnet. Der Schlepper umfasst einen Rahmen 12 mit zwei Achsbaugruppen 14, 16. Auf dem Rahmen 12 ist zwischen den beiden Achsbaugruppen 14,16 ein Unterflurantriebsaggragat 18 angeordnet und auf der Oberseite des Rahmens eine Führerplatzbaugruppe 20 mit einer Kabine 22. Das Unterflurantriebsaggregat kann, wie aus Figur 3 ersichtlich, von oben dadurch zugänglich gemacht werden, dass die Führerplatzbaugruppe 20 samt Kabine 22 um eine Kippachse Q1 hochgekippt wird. Hierzu dienen zwei hydraulische Kraftgeräte 24, deren Anordnung aus Figuren 2 und 3 ersichtlich ist. Diese Kraftgeräte sind mit ihrem jeweiligen Zylinder bei 26 an dem Rahmen angelenkt und greifen mit ihrer jeweiligen Kolbenstange bei 28 an der Führerplatzbaugruppe 20 gelenkig an. Wie aus Figur 1 ersichtlich, sind die Kraftgeräte 24 durch einen Verteilerblock 29 mit dem hydraulischen Kreislauf des Schleppers verbunden, so dass das Kraftgerät 24 wahlweise eingefahren werden kann (Figur 1) oder ausgefahren werden kann (Figur 3).

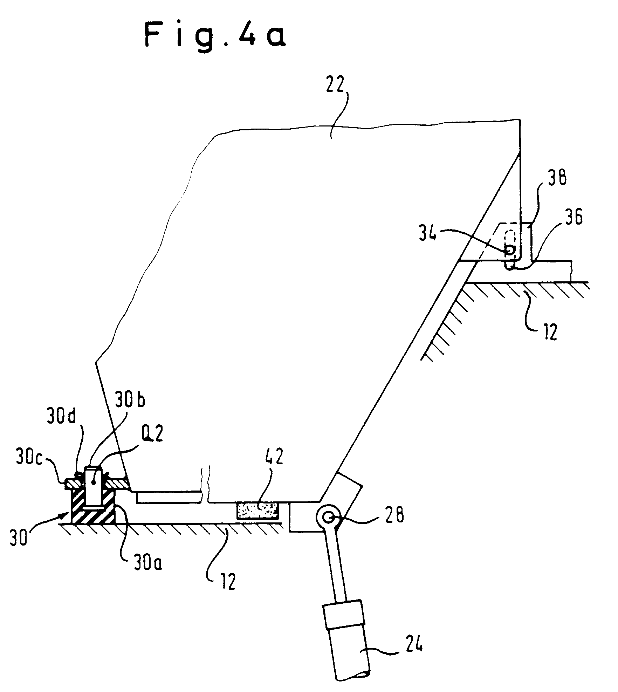

Die Führerplatzbaugruppe ist im Arbeitsbetrieb im Bereich einer Querachse Q2 auf dem Rahmen aufgestützt und zwar mittels zweier elastischer Auflagerelemente 30, die im einzelnen in Figur 4a dargestellt sind. Ein Gummiblock 30a ist auf dem Rahmen 12 befestigt und trägt elastisch einen Zapfen 30b. An der Kabine 22 ist eine Öse 30c angebracht, welche den Zapfen 30b mit Übermaß umschliesst. Ein Splint 30d sichert die Öse 30c auf dem Zapfen 30b und dem Gummiblock 30a. Durch das Übermaß der Öse 30c gegenüber dem Zapfen 30b ist eine Schwenkbarkeit der Kabine 22 um die Querachse Q2 gewährleistet Im Arbeitsbetrieb ist der Splint 30d angebracht. Weiterhin wird für den Arbeitsbetrieb gemäss Figur 4a der Ausfahrweg des Kraftgeräts 24 so eingestellt, dass ein an der Kabine 22 angebrachter Bolzen 34 eine mittlere Einstellung in einem Langloch 36 einnimmt, welches in einem Block 38 auf dem Rahmen 12 angebracht ist. Das Langloch 36 folgt annähernd einer Kreisbahn um die Querachse Q2. Im Arbeitsbetrieb ist das Kraftgerät 24 über den Verteilerblock 29 an ein Federungs- und Dämpfungselement 40 angeschlossen. Dieses Federungs- und Dämpfungselement erlaubt der Kolbenstange eine gedämpfte Ein- und Ausfederung gegenüber dem Zylinder des Kraftgerätes 24, so dass der Bolzen 34 in dem Langloch 36 auf- und abschwingt , ohne die Enden des Langlochs zu berühren. Die Abwärtsschwingungshübe sind überdies durch elastische Lagerelemente 42 beschränkt, welche an der Kabine 22 angebracht sind und gegen den Rahmen 12 stossen können. Gemäss Figur 4a ist die Kabine in ihrem vorderen Endbereich durch die Gummielemente 30a und andererseits durch die Kraftgeräte 24 federnd gelagert und gedämpft. Dabei ist zu beachten, dass gemäss Figur 1 die Kraftwirkungslinie der Kraftgeräte 24 annähernd durch die Sitzfläche des Führersitzes 46 geht.

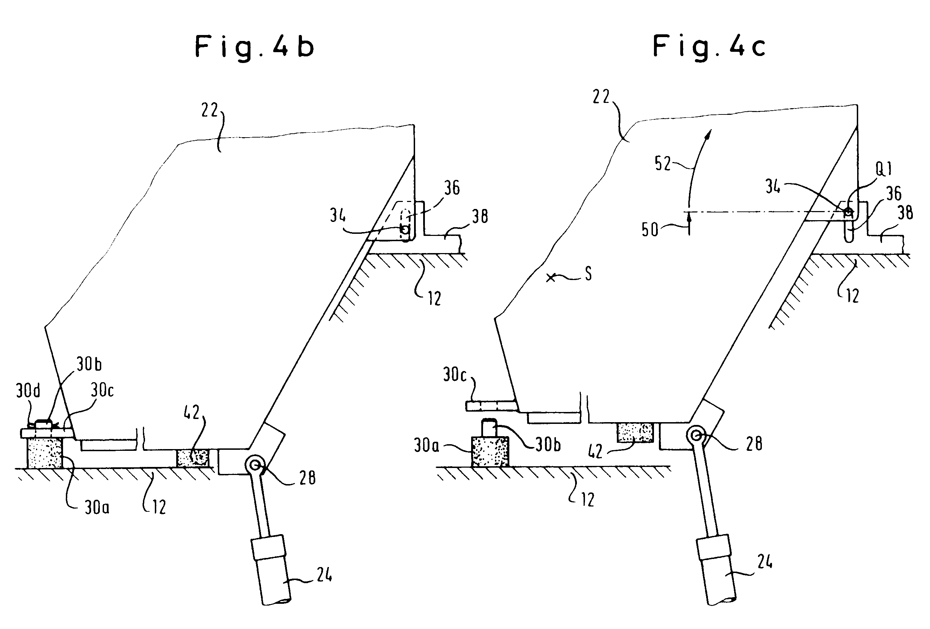

In Figur 4b ist dargestellt, dass bei unwirksamem Kraftgerät 24 die Kabine 22 mittels der elastischen Lagerelemente 42 auf dem Rahmen 12 abgestützt ist, wobei der Bolzen 34 immer noch nicht das untere Ende des Langlochs 36 berührt.

Zum Bewegungsablauf beim Kippen in die Stellung der Figur 3 wird nunmehr auf die Figur 4c verwiesen. Nach Abkoppeln des Federungs- und Dämpfungselements 30 von dem Kraftgerät 24 wird das Kraftgerät 24 an eine Pumpe 48 gelegt. Die Kolbenstange fährt aus, dabei wandert der Bolzen 34 in dem Langloch 36 zu dessen oberen Ende hin in Pfeilrichtung 50. Damit nimmt die Kippachse Q1 die in Figur 4c gezeichnete Lage ein. Wenn nun das Kraftgerät weiter ausfährt, so kippt die Kabine 22 in Richtung des Pfeils 52, wobei die Öse 30c von dem Gummiblock 30a abhebt und den Eingriff mit dem Zapfen 30d verlässt, was ja möglich ist, nachdem der Splint 30d gezogen ist. Dank der Schwerpunktlage S der mit der Kabine 22 vereinigten Führerplatzbaugruppe (siehe Figur 4c) behält der Bolzen 34 seine Lage am oberen Ende des Langlochs 36 bei, so dass während des Kippens der Kabine 22 in der Stellung gemäss Figur 3 diese keine unkontrollierten Bewegungen gegenüber dem Rahmen ausführen kann.

Von wesentlicher Bedeutung ist, daß die Kraftgeräte 24 in der Betriebsstellung gemäß Fig. 1 und 4a im wesentlichen vertikal angeordnet sind und zwar entweder hinter oder seitlich von dem Unterflurantriebsaggregat 18, wobei die Bauhöhe des Unterflurantriebsaggregat 18 die für die Federung vorteilhafte vertikale Anordnung der Kraftgeräte trotz deren im Hinblick auf das Kippen großer Baulänge zuläßt. Jedenfalls müssen die Kraftgeräte 24 (bzw. das Kraftgerät 24) vor der Kippachse Q1 angeordnet sein. Die Neigung des bzw. der Kraftgeräte 18 in der Betriebsstellung gemäß Fig. 1 und 4 sollte nicht mehr als ± 30° gegenüber der Vertikalen betragen. Im Hinblick auf die Freigabe des Zugangs zu dem Unterflurantriebsaggregat (Fig. 3) ist es vorteilhaft, daß die Kippachse Q1, wie in Fig. 1 gezeichnet, höher liegt als die Anlenkstelle 28 der Kolbenstange an der Kabine 22. Während die Anlenkstelle 28 annähernd auf Fußbodenhöhe der Kabine 22 liegt, liegt die Kippachse Q1 annähernd auf Sitzflächenhöhe.

Das Federungs- und Dämpfungselement 40 umfaßt einen Hydraulikraum 40a, der mit dem Zylinder des Kraftgeräts 24 verbindbar ist, und einen Federraum 40b, der von dem Hydraulikraum 40a durch eine Membran oder eine schwimmende Trennwand 40c getrennt ist. Der Federraum 40b kann eine mechanische Feder oder eine Gasdruckfüllung enthalten. Die Dämpfung kann durch eine gedrosselte Überströmverbindung eines Kolbens erzeugt werden, der mit der Kolbenstange des Kraftgeräts 24 verbunden ist und dessen Zylinderraum in zwei Arbeitsräume unterteilt.

Das Federungs- und Dämpfungselement 40 kann auch in das bzw. die Kraftgeräte 24 integriert sein. Für das Wohlbefinden und die Sicht des Fahrers nach vorne, d.h. in Fig. 1 nach links, ist es von wesentlicher Bedeutung, daß die größeren Federungsausschläge im rückwärtigen Bereich der Kabine, d.h. im Bereich der Sitzfläche auftreten.

## Patentansprüche

1. Kraftfahrzeug mit einem Rahmen (10) und einer auf diesem Rahmen (10) federnd aufgelagerten Kabine (22) mit Führerplatzeinrichtung, welche durch mindestens ein hydraulisches Kraftgerät (24) um eine nahe einem Kabinenende gelegene Kippachse (Q1) kippbar und zum Zwecke des Kippens in einer nahe dem anderen Kabinenende gelegenen Querachse (Q2) von dem Rahmen (10) lösbar ist, wobei in der Kippachse (Q1) ein Federungsbewegungen der Kabine gestattendes, annähernd vertikales Bewegungsspiel (34, 36) besteht,
dadurch gekennzeichnet,
daß bei Ausbildung des Kraftfahrzeugs als Schlepper mit einem zwischen den Achsbaugruppen (14, 16) angeordneten Unterflurantriebsaggregat (18) die Kippachse (Q1) im Bereich des rückwärtigen Kabinenendes angebracht ist und das Kraftgerät (24) ebenfalls im Bereich des rückwärtigen Kabinenendes an der Rückseite des Unterflurantriebsaggregats oder seitlich von diesem und vor der Kippachse im wesentlichen vertikal und in höhenmäßiger Überlappung mit dem Unterflurantriebsaggregat angeordnet und im Fahrbetrieb bei mittlerer Höheneinstellung der Kabine (22) innerhalb des vertikalen Bewegungsspiels (34, 36) auf Federungs- und gegebenenfalls Dämpfbetrieb umschaltbar ist, derart, daß die Kabine (22) um die nahe dem vorderen Kabinenende gelegene Querachse (Q2) durch das Kraftgerät (24) gefederte und gegebenenfalls gedämpfte Schwingungen ausführen kann.

2. Kraftfahrzeug nach Anspruch 1,
dadurch gekennzeichnet,
daß eine Anlenkstelle (28) des Kraftgeräts (24) an der Kabine (22) in deren Fahrstellung unterhalb der Kippachse (Q1) angeordnet ist.

3. Kraftfahrzeug nach Anspruch 1 oder 2,
dadurch gekennzeichnet,
daß die Kippachse (Q1) in seitlicher Ansicht des Kraftfahrzeugs oberhalb des Umrisses der rückwärtigen Räder angeordnet ist.

4. Kraftfahrzeug nach einem der Ansprüche 1 bis 3,
dadurch gekennzeichnet,
daß die Kippachse von einer Kippschiebelagerung (34, 36) gebildet ist, welche als Bolzenlanglochlagerung ausgebildet ist.

5. Kraftfahrzeug nach einem der Ansprüche 1 bis 4,
dadurch gekennzeichnet,
daß die Kabine (22) im Bereich der Querachse (Q2) gegenüber dem Rahmen (12) schwingungsfähig gelagert ist (bei 30a).

6. Kraftfahrzeug nach einem der Ansprüche 1 bis 5,
dadurch gekennzeichnet,
daß im Bereich der Querachse (Q2) eine Gelenkverbindung (30b, 30c, 30d) vorgesehen ist und daß diese Gelenkverbindung (30b, 30c, 30d) von einer durch Splint (30d) oder dergleichen gesicherten Ösenzapfenverbindung (30b, 30c) gebildet ist, wobei die Öse (30c) an der Kabine (22) und der Zapfen (30b) an dem Rahmen (12) angebracht ist oder umgekehrt, und wobei von den beiden Teilen Öse (30c) und Zapfen (30b) mindestens einer (30b) elastisch an seinem jeweiligen Träger (12) gelagert ist.

7. Kraftfahrzeug nach einem der Ansprüche 1 bis 6,
dadurch gekennzeichnet,
daß zwischen dem Rahmen (12) und der Kabine (22) außerhalb der Querachse (Q2) und vorzugsweise im Bereich des Angriffs (28) des Kraftgerätes (24) an der Kabine (22) mindestens ein elastisches Lagerelement (42) vorgesehen ist, welches bei Wirkungslosigkeit des Kraftgerätes (24) zusammen mit einer Auflagerung (30b, 30c, 30d) im Bereich der Querachse (Q2) die Kabine (22) stabil und schwingungsfähig auf dem Rahmen (12) abstützt und zwar so, daß die Kippschiebelagerung (34, 36) wiederum eine mittlere Stellung innerhalb ihres Schiebeweges einnimmt.

8. Kraftfahrzeug nach einem der Ansprüche 1 bis 7,
dadurch gekennzeichnet,
daß die Angriffsrichtung des Kraftgerätes (24) annähernd durch die Sitzfläche eines Führersitzes (46) verläuft.

## Claims

1. A motor vehicle with a chassis (10) and with, spring mounted on this chassis (10), a cabin (22) with driver's place fittings and which is adapted to be tilted by at least one hydraulic power unit (24) about a tilting axis (Q1) situated close to the cabin end and which, for the purpose of tilting in a transverse axis (Q2) situated close to the other end of the cabin, can be separated from the chassis (10) whereby there is in the tilting axis (Q1) an approximately vertical movement clearance (34, 36) which permits the cabin to perform springing movements, characterised in that if the vehicle is constructed as a tractor with an underfloor drive unit (18) disposed between the axle assemblies (14, 16), the tilting axis (Q1) is in the region of the rear end of the cabin and a power unit (24) is likewise in the region of the rear end of the cabin at the back of the underfloor drive unit or laterally of this latter and in front of the tilting axis, being substantially vertical and overlapping in height the underfloor drive unit and which can, while the vehicle is travelling, and with the cabin (22) situated midway within the vertical movement clearance (34, 36), be switched over to springing and possibly damping operation so that the cabin (22) is able to perform oscillating movements about the transverse axis (Q2) which is close to the front end of the cabin and which are sprung and possibly damped by the power unit (24).

2. A motor vehicle according to claim 1, characterised in that a point of articulation (28) of the power unit (24) is disposed on the cabin (22) in its travelling position underneath the tilting axis (Q1).

3. A motor vehicle according to claim 1 or 2, characterised in that the tilting axis (Q1) is disposed above the outline of the rear wheels when the motor vehicle is viewed from the side.

4. A motor vehicle according to one of claims 1 to 3, characterised in that the tilting axis is constituted by a tilting sliding mounting (36) which is constructed as a bolt and elongated hole mounting.

5. A motor vehicle according to one of claims 1 to 4, characterised in that the cabin (22) is mounted (at 30a) in the region of the transverse axis (Q2) and is capable of oscillation in respect of the chassis (12).

6. A motor vehicle according to one of claims 1 to 5, characterised in that in the region of the transverse axis (Q2) there is an articulated connection (30b, 30c, 30d) and in that this articulated connection (30b, 30c, 30d) is formed by a ring-and-journal connection (30b, 30c) secured by a cotter pin (30d) or the like, the ring (30c) being mounted on the cabin (22) and the journal (30b) on the chassis (12) or vice versa, and whereby of the two parts, ring (30c) and journal (30b) at least one (30b) is elastically mounted on its respective support (12).

7. A motor vehicle according to one of claims 1 to 6, characterised in that between the chassis (12) and the cabin (22) outside the transverse axis (Q2) and preferably in the region of engagement (28) of the power unit (24) on the cabin (22) there is at least one elastic bearing element (42) which, if the power unit (24) becomes ineffective, supports the cabin (22), together with a mounting (30b, 30c, 30d) in the region of the transverse axis (Q2) in such a way that the cabin is capable of oscillation and is stable on the chassis (12), in fact in such a way that the tilting sliding mounting (34, 36) again assumes a midway position within its displacement path.

8. A motor vehicle according to one of claims 1 to 7, characterised in that the direction of application of the power unit (24) extends approximately through the seating area of a driver's seat (46).

## Revendications

1. Véhicule automobile avec un châssis (10) et une cabine (2) posée élastiquement sur ce châssis (10), avec un agencement de poste de conducteur, basculable au moyen d'au moins un vérin hydraulique (24), autour d'un axe de basculement (Q1) placé près d'une extrémité de cabine et pouvant être désolidarisé du châssis (10) en vue de basculer autour d'un axe transversal (Q2) placé près de l'autre extrémité de cabine, un jeu de déplacement (34, 36) à peu près vertical existant afin de permettre des déplacements de débattement élastique de la cabine, dans l'axe de basculement (Q1), caractérisé en ce que, dans le cas de réalisation du véhicule automobile en tracteur avec un groupe d'entraînement sous-plancher (18), disposé entre les groupes d'essieux (14, 16), l'axe de basculement (Q1) est placé dans la zone de l'extrémité arrière de cabine et le vérin (24) est également disposé dans la zone de l'extrémité arrière de cabine, en face arrière du groupe d'entraînement sous-plancher ou bien à côté de celui-ci et devant l'axe de basculement, sensiblement verticalement et avec chevauchement en hauteur avec le groupe d'entraînement sous-plancher, et, en fonctionnement de roulage, lorsque l'on se trouve dans la position de hauteur médiane de la cabine (22), peut être commuté pour passer en fonctionnement avec suspension et le cas échéant amortissement dans les limites du jeu de déplacement vertical (34, 36), de manière que la cabine (22) puisse effectuer autour de l'axe transversal (Q2), placé près de l'extrémité avant de cabine, des oscillations permises par l'élasticité du vérin (24) et, le cas échéant, amorties.

2. Véhicule automobile selon la revendication 1, caractérisé en ce qu'un point d'articulation (28) du vérin (24) sur la cabine (22) est disposé au-dessous de l'axe de basculement (Q1), lorsque l'on se trouve en position de roulage.

3. Véhicule automobile selon la revendication 1 ou 2, caractérisé en ce que l'axe de basculement (Q1) est disposé au-dessus du contour des roues arrières, lorsque l'on observe le véhicule automobile par le côté.

4. Véhicule automobile selon l'une des revendications 1 à 3, caractérisé en ce que l'axe de basculement est constitué par un appui à coulissement et basculement (34, 36), réalisé sous forme de trou oblong permettant le passage de boulons.

5. Véhicule automobile selon l'une des revendications 1 à 4, caractérisé en ce que la cabine (22) est montée (en 30a) dans la zone de l'axe transversal (Q2) de façon à permettre des oscillations par rapport au châssis (12).

6. Véhicule automobile selon l'une des revendications 1 à 5, caractérisé en ce que, dans la zone de l'axe transversal (Q2), est prévue une liaison d'articulation (30b, 30c, 30d), et en ce que cette liaison d'articulation (30b, 30c, 30d) est constituée par une liaison à tourillon et oeillet (30b, 30c), fixée au moyen d'une goupille (30d), l'oeillet (30c) étant placé sur la cabine (22) et le tourillon (30b) sur le châssis (12), ou inversement, et, parmi les deux parties que sont l'oeillet (30c) et le tourillon (30b), au moins l'une (30b) est montée élastiquement sur son support (12) respectif.

7. Véhicule automobile selon l'une des revendications 1 à 6, caractérisé en ce que, entre le châssis (12) et la cabine (22), est prévu hors de l'axe transversal (Q2) et, de préférence, dans la zone d'action (28) du vérin (24) sur la cabine (22), au moins un élément d'appui (42) élastique qui, en cas de déplacement dans le cadre du fonctionnement du vérin (22), soutient conjointement, à l'aide d'un support (30b, 30c, 30d) dans la zone de l'axe transversal (Q2), la cabine (22) sur le châssis (12), d'une façon stable et permettant des oscillations, notamment de manière que l'appui à basculement et coulissement (34, 36) prenne de nouveau une position moyenne, située dans les limites de sa course de coulissement.

8. Véhicule automobile selon l'une des revendications 1 à 7, caractérisé en ce que la direction d'action du vérin (24) passe à peu près dans la surface d'assise d'un siège de conducteur (46).
